Europäisches Patentamt

European Patent Office

Office européen des brevets

(11) Publication number: **0 173 758**
**B1**

# EUROPEAN PATENT SPECIFICATION

(45) Date of publication of patent specification: **15.03.89**

(51) Int. Cl.⁴: **F 16 D 55/224**

(21) Application number: **84110460.7**

(22) Date of filing: **03.09.84**

(54) **Floating disk brake.**

(43) Date of publication of application:
**12.03.86 Bulletin 86/11**

(45) Publication of the grant of the patent:
**15.03.89 Bulletin 89/11**

(84) Designated Contracting States:
**DE GB IT**

(56) References cited:
**GB-A-2 072 775**
**US-A-4 060 154**

(73) Proprietor: **SUMITOMO ELECTRIC INDUSTRIES
LIMITED**
**No. 15, Kitahama 5-chome Higashi-ku
Osaka-shi Osaka 541 (JP)**

(72) Inventor: **Nakajima, Shiro Sumitomo Electric
Ind., Ltd.**
**Itami Works No. 1-1, Koyakita 1-chome
Itami-Shi Hyogo (JP)**
Inventor: **Fukudome, Koji Sumitomo Electric
Ind., Ltd.**
**Itami Works No. 1-1, Koyakita 1-chome
Itami-Shi Hyogo (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to a floating disk brake suitable for breaking a two-wheeled vehicle, according to the preamble part of claim 1.

In general, two types of disk brakes are available for two-wheeled vehicles. In one of these types, a floating caliper is supported by a fixing member, which is mounted on a member of the vehicle body such as a front fork. In the other type of disk brake, a torque receiving part is formed integrally with the front fork, and the caliper is split in the axial direction of the disk rotor as the pads wear.

A floating disk brake according to the first type of disk brake is known from GB—A 2 072 775. With the known brake, the caliper is supported for sliding movement but the brake pads transmit the breaking torque directly to a separate torque-taking member which is affixed to the front fork separately from the caliper. As a result, additional pieces are required and, thus, the known brake is disadvantaged in that it is complex and relatively heavy. Furthermore, with the former type of disk brake, since the fixing member is disposed between the caliper and the front fork, the center of gravity of the caliper is offset from the fork center, and hence, its inertial moment relative to the fork is large, which lowers the handling characteristics of the brakes.

The latter disk brake type, although superior to the above-described disk brake in performance, suffers from the difficulty that the torque-receiving part lying over the disk rotor must be formed on the front fork so as to extend therefrom. Thus, the structure of the front fork is intricate and the manufacturing cost thereof is high. Furthermore, in the other type of disk brake, it is difficult to make the right and left pads of the same configuration. Therefore, because the pads cannot be interchanged, they are more expensive.

Summary of the Invention

Accordingly, an object of the invention is to provide a floating disk brake according to the preamble part of claim 1 which is of small weight and low manufacturing cost and in which the caliper slides stably and the center of gravity of the caliper is close to the front fork or the like. The solution of this object is achieved by the features of claim 1.

In further detail, in the floating disk brake according to the invention, a brake force applied to the pads is first received by the caliper and then transmitted to the vehicle body through two slide bolts serving also as caliper mounting bolts. At least one of the bolts extends over the disk rotor in such a manner that the slide center thereof is substantially coincident with the center of the disk rotor.

Furthermore, the sliding support for the caliper is disposed in an area that is positioned axially at the centre of the brake rotor. Thus, certain twisting forces are avoided.

Brief Description of the Drawings

Figs. 1, 2 and 3 are a front view, a left side view, and a bottom view showing an example of a disk brake according to the invention; and

Fig. 4 is a sectional view showing slide parts of a caliper.

Description of the Preferred Embodiments

A preferred embodiment of the invention will be described with reference to the accompanying drawings.

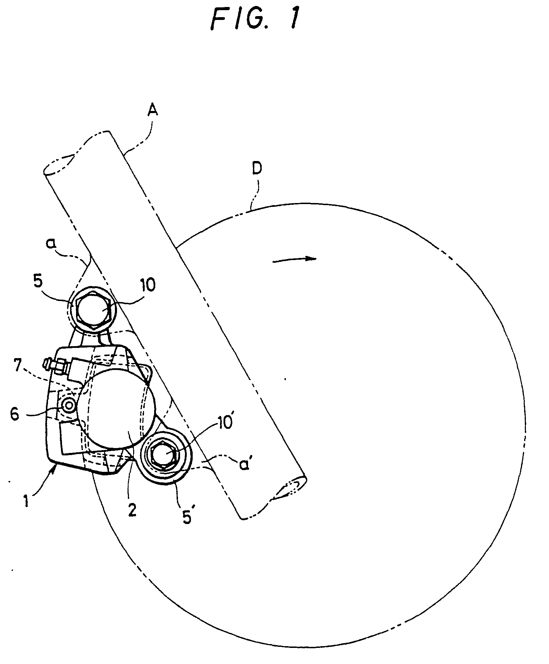

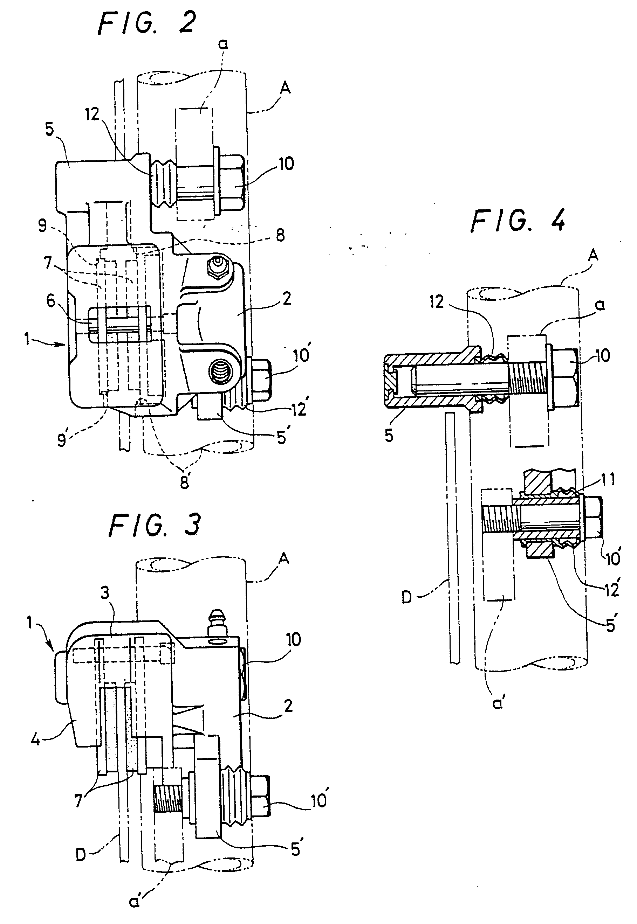

In Figs. 1 through 3, reference numeral 1 designates a caliper which includes, as one unit, a cylinder part 2, a bridge part, an outer pawl 4 and slide parts 5 and 5' into which slide bolts (described later) are inserted. A liquid-pressure-operated piston (not shown) is mounted in the cylinder part. The bridge part of the caliper has a pin 6 at the center. The pin 6 is laid parallel to the axis of rotation of a disk rotor D and passes through apertures in protrusions which extend from the peripheries of the backing plates of a pair of pads 7 which are disposed on both sides of the disk rotor. That is, the pin 6 prevents the pads 7 from coming off the caliper. As shown in Fig. 2, torque receiving surfaces 8, 8' and 9, 9' are formed in the caliper on both sides corresponding to the inner and outer sides of the disk rotor and are abutted against the side surfaces of respective ones of the pads 7. Specifically, the surfaces 8 and 9 receive the brake torque which is applied to the pads when the vehicle moves forwardly and the surfaces 8' and 9' receive the brake torque which is applied to the pads when the vehicle moves backwardly.

Of the slide parts of the caliper, the slide part 5 positioned on the outer side of the rotor D is adjacent the periphery of the rotor, and the other slide part 5' positioned on the inner side of the rotor D is provided on one side of the rotor and extends in the axial direction of the rotor D. As shown in Fig. 4, a slide bolt 10, which receives the main portion of the torque, is fitted into the hole of the slide part 5 so that the slide part 5 is slidable with respect to the caliper, and another slide bolt 10', which receives the remaining part of the torque, is fitted into the hole of the slide part 5' in the same manner.

The above-described slide bolts 10 and 10' serve also for mounting the caliper on the vehicle. The bolts 10 and 10' are screwed into mounting parts a and a' formed on a member A of the vehicle body such as the front fork. One end portion of the bolt 10 inserted into the slide part 5 extends over the rotor in such a manner that the center of the effective slide length of the bolt coincides with the center of the thickness of the rotor.

The slide bolt 10' is preferably a stepped bolt. However, in the case where it is a straight bolt as shown in Fig. 4, a sleeve 11 should be placed over the bolt so as to provide a sufficiently tight fit. In this connection, the slide part 5 may be shifted radially of the rotor so that the bolt 10' extends over the rotor. However, it should be noted that, in this case, it is necessary to greatly protrude the mounting part *a'* of the member of the vehicle body. Accordingly, it is preferable that the slide part and the pin be designed as shown in Fig. 4.

In the figures, references numerals 12 and 12' designate dust boots.

In the disk brake thus constructed, the brake torque which acts on the pads 7 is received by the torque receiving surfaces 8 and 9 or 8' and 9' and transmitted to the caliper. The brake torque thus transmitted is received by the two slide bolts which are fixedly secured to the vehicle body.

As described above, in the disk brake according to the invention, the two slide bolts serve also as the mounting bolts of the caliper, and a brake force applied to the pads is transmitted through the caliper to these bolts. No fixing member as used in the conventional floating disk brake is needed. Accordingly, the disk brake of the invention is smaller in weight and lower in manufacturing cost than the conventional floating disk brake.

The mounting parts formed on the member of the vehicle body are simple in configuration. The member can be readily manufactured at low cost.

In the inventive disk brake, the center of the effective slide length of at least one of the slide bolts is substantially coincident with the center of the thickness of the rotor, and therefore the caliper will not be twisted during braking. Accordingly, the caliper operates smoothly to permit a stable braking operation. In addition, decreases of the brake force due to inadequate contact of the pads is eliminated, and nonuniform wear of the lining members reduced.

Furthermore, since the disk brake has no fixing member, the center of gravity of the caliper may be set close to the front fork, for instance, so that the inertial moment relative to the front fork is decreased, whereby the handling characteristics are improved.

## Claims

1. A floating disk brake comprising: a pair of brake pads (7), said brake pads (7) each having a backing plate; a caliper (1); torque receiving surfaces (8, 8', 9, 9') which are disposed on the outer and inner sides of a disk rotor (D), side surfaces of said backing plates of said pads (7) abutting against said torque receiving surfaces (8, 8', 9, 9'); a pin (6) for supporting said pads (7) on both sides of the disk rotor (D) provided in said caliper (1) and extending parallel to a rotary axis of said disk rotor (D), said pin (6) being inserted into central portions of peripheries of said backing plates; and two slide bolts (10, 10') for slidably supporting said caliper (1), said slide bolts (10, 10') having first end portions screwed into a member (a) rigid with a vehicle body (A) and having second end portions slidably inserted into respective slide parts (5, 5') of said caliper (1) disposed on the inner and outer sides of said disk rotor (D), at least one (10) of said slide bolts (10, 10') being arranged so as to lie over said disk rotor (D) with a slide center of said slide bolt (10) being substantially coincident with a center of a thickness of said disk rotor (D).

2. Floating disk brake of claim 1 being characterised in that one (10) of said slide bolts (10, 10') is arranged so as to lie over said disk rotor (D) with a slide center of said slide bolt (10) substantially coincident with a center of a thickness of said disk rotor (D) and the other (10') of said slide bolts (10, 10') is arranged adjacent to an inner surface of said disk rotor (D).

3. Floating disk brake of claim 2 being characterised in that the other (10') of said slide bolts (10, 10') is a stepped bolt.

4. Floating disk brake of claim 2 being characterised in that the other (10') of said slide bolts (10, 10') is a straight bolt having a sleeve (11) fitted around a slide surface thereof.

5. Floating disk brake of claim 1 being characterised in that dust boots (12, 12') are fitted around each of said slide bolts (10, 10').

## Patentansprüche

1. Schwimmsattel-Scheibenbremse, mit: einem Paar Bremsbeläge (7), wobei die Bremsbeläge (7) jeweils eine Rückplatte aufweisen; einer Lehre (1); drehmomentaufnehmenden Oberflächen (8, 8', 9, 9'), die an der Außen- und Innenseite eines Scheibenrotors (D) angeordnet sind, wobei Seitenflächen der Rückplatten der Beläge (7) gegen die drehmomentaufnehmenden Flächen (8, 8', 9, 9') anliegen; einem Bolzen (6) zur Lagerung der Beläge (7) an beiden Seiten des Scheibenrotors (D), vorgesehen in der Lehre (1) und sich parallel zur Drehachse des Scheibenrotors (D) erstreckend, wobei der Bolzen (6) in Mittelabschnitte der Umfänge der Rückplatten eingesetzt ist; und zwei Gleitschrauben (10, 10') zur gleitbaren Lagerung der Lehre (1), wobei die Gleitschrauben (10, 10') einen ersten Endabschnitt aufweisen, der in ein starr mit einer Fahrzeugkarosserie (A) verbundenes Teil (a) eingeschraubt ist und einen zweiten Endabschnitt aufweisen, der gleitbar in jeweilige Gleitteile (5, 5') der Lehre (1), angeordnet an der Innen- und Außenseite des Scheibenrotors (D), eingeschraubt ist, wobei zumindest eine (10) der Gleitschrauben (10, 10') so angeordnet ist, daß sie über dem Scheibenrotor (D) liegt, wobei ein Gleitzentrum der Gleitschraube (10) im wesentlichen mit der Mitte einer Dickenerstreckung des Scheibenrotors (D) übereinstimmt.

2. Schwimmsattel-Scheibenbremse nach Anspruch 1, dadurch gekennzeichnet, daß eine (10) der Gleitschrauben (10, 10') so angeordnet ist, daß sie über dem Scheibenrotor (D) liegt, wobei ein Gleitzentrum der Gleitschraube (10) im wesentlichen mit einer Mitte einer Dickenerstreckung des Scheibenrotors (D) übereinstimmt und die andere (10') der Gleitschrauben (10, 10') benachbart zu einer Innenfläche des Scheibenrotors (D) angeordnet ist.

3. Schwimmsattel-Scheibenbremse nach Anspruch 2, dadurch gekennzeichnet, daß die andere (10') der Gleitschrauben (10, 10') eine Stufenschraube ist.

4. Schwimmsattel-Scheibrenbremse nach Anspruch 2, dadurch gekennzeichnet, daß die andere (10') der Gleitschraube (10, 10') eine gerade Schraube ist, auf deren Gleitfläche eine Hülse (11) aufgesetzt ist.

5. Schwimmsattel-Scheibenbremse nach Anspruch 1, dadurch gekennzeichnet, daß Staubschuhe (12, 12') auf jede der Gleitschrauben (10, 10') aufgesetzt sind.

**Revendications**

1. Frein à disque à étrier flottant, comprenant: une paire de plaquettes de frein (7), possédant chacune une plaque support; un étrier (1); des surfaces de réaction (8, 8', 9, 9') destinées à encaisser le couple de freinage, qui sont disposées sur le côté extérieur et le côté intérieur d'un rotor discoïde ou disque (D) et contre lesquelles sont appliquées des surfaces latérales des plaques supports des plaquettes (7); une tige (6) destinée à supporter les plaquettes (7) sur les deux côtès du disque (D), qui est disposée dans l'étrier (1) et s'étend parallèlement à l'axe de rotation du disque (D), la tige (6) étant insérée dans des saillies centrales prévues à la périphérie des plaques supports; et deux vis (10, 10') formant des supports à coulissement pour l'étrier (1), les vis (10, 10') possédant une première partie extrême vissée dans un élément (a) rigidement solidaire d'un cadre ou d'un châssis de véhicule (A) et une seconde partie extrême présentant une surface de glissement, qui est insérée dans une partie de coulissement (5, 5') correspondante de l'étrier (1), partie qui peut coulisser sur la surface de glissement de lã vis, les parties de coulissement (5, 5') de l'étrier (a) étant placées sur le côte intérieur et le côté extérieur du disque (D), au moins l'une (10) des vis (10, 10') étant disposée transversalement au disque (D), devant le bord de ce disque, de manière que le milieu de la course de glissement définie par la vis (10) se trouve sensiblement en regard du milieu de l'épaisseur du disque (D).

2. Frein à disque selon la revendication 1, caractérisé en ce qu l'une (10) des vis (10, 10') est disposée transversalement au disque (D), devant le bord de celui-ci, de manière que le milieu de la course de glissement définie par cette vis (10) se trouve sensiblement en regard du milieu de l'épaisseur du disque (D), l'autre (10') des vis (10, 10') étant disposée près de la surface intérieure du disque (D).

3. Frein à disque selon la revendication 2, caractérisé en ce que ladite autre vis (10') est une vis étagée.

4. Frein à disque selon la revendication 2, caractérisé en ce que ladite autre vis (10') est une vis droite ou non étagée, sur laquelle est enfilé un manchon (11) qui entoure la surface de glissement.

5. Frein à disque selon la revendication 1, caractérisé en ce qu'un soufflet de protection antipoussière (12, 12') est monté autour de chacune des vis (10, 10').

# FIG. 1

FIG. 2

FIG. 4

FIG. 3